# EUROPÄISCHE PATENTSCHRIFT

(11) **EP 0 709 303 B1**
(45) Veröffentlichungstag und Bekanntmachung des Hinweises auf die Patenterteilung: **17.09.1997**
(21) Anmeldenummer: 95116235.3
(22) Anmeldetag: 16.10.1995
(51) Int. Cl.: B65D 77/06

(54) **Palettenbehälter für den Transport und die Lagerung von Flüssigkeiten**
Pallet container for the transport and storage of liquids
Récipient-palette pour le transport et le stockage de liquides

(30) Priorität: 29.10.1994 DE 4438739
(43) Veröffentlichungstag der Anmeldung: 01.05.1996
(73) Patentinhaber: PROTECHNA S.A., 1701 Fribourg (CH)
(72) Erfinder: Schütz, Udo, D-56242 Selters / Westerw. (DE)
(74) Vertreter: Pürckhauer, Rolf, Dipl.-Ing.

(56) Entgegenhaltungen:
- EP-A- 0 509 228

## Beschreibung

Die Erfindung betrifft Palettenbehälter für den Transport und die Lagerung von Flüssigkeiten, mit einem quaderförmigen Innenbehälter mit einem verschließbaren Einfüllstutzen und einem Auslaufstutzen zum Anschluß einer Entnahmearmatur, der einen Ablaufboden und einen Gitter- oder Blechmantel ausgebildeten Außenmantel aufweist und in einer als Palette ausgebildeten, flachen Bodenwanne aus Blech oder Kunststoff steht, wobei der Innenbehälter mindestens eine Flüssigkeitsdichte Innenhülle aus Kunststoff und einen Mantel aus Stahlblech aufweist. Solch ein Palettenbehälter ist aus der Druckschrift EP-A-0 509 228 bekannt.

Die Notwendigkeit zur Einsparung von Rohstoffen sowie von Transport- und Lagerkosten und die gesetzlichen Umweltschutzvorschriften zwingen die einschlägige Industrie dazu, Flüssigkeiten zum Transport und zur Lagerung in großvolumigen, auf dem Markt angebotenen, als Mehrwegbehälter einsetzbaren Behältern nach der DE 42 06 945 C1 anstatt wie bisher in Fässern mit wesentlich geringerem Fassungsvermögen abzufüllen.

Der gattungsgemäße Palettenbehälter bietet nicht die für den Transport von umweltgefährdenden Flüssigkeiten der hohen Gefahrenklasse geforderte Sicherheit.

Der Erfindung liegt die Aufgabe zugrunde, den gattungsgemäßen Palettenbehälter im Hinblick auf eine optimale Transportsicherheit für gefährliche Flüssgkeiten sowie eine wirtschaftliche Rekonditionierbarkeit für einen mehrfachen Einsatz weiterzuentwickeln.

Diese Aufgabe ist erfindungsgemäß gelöst durch einen Palettenbehälter mit den Merkmalen des Patentanspruches.

Der erfindungsgemäße Palettenbehälter verkörpert eine optimale Lösung der gestellten Aufgabe.

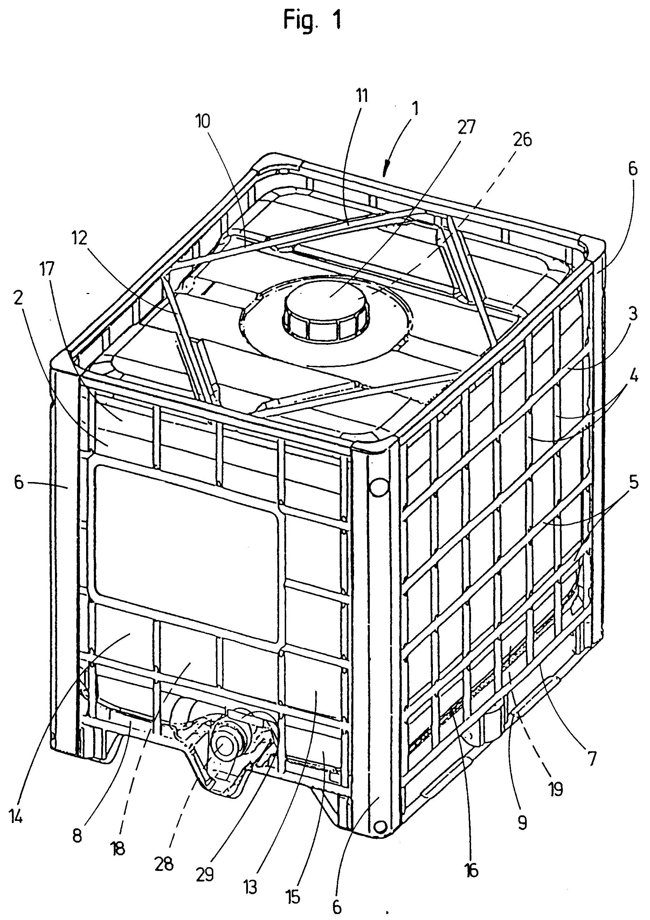

Der neue Palettenbehälter ist nachfolgend anhand von Zeichnungen erläutert. Es zeigt
- Fig. 1: eine perspektivische Darstellung des Palettenbehälters,
- Fig. 2: eine ausschnittsweise Darstellung einer Falzverbindung von Deckel und Mantel des Innenbehälters des Palettenbehälters,
- Fig. 3: eine weitere Ausführungsform der Falzverbindung von Deckel und Mantel des Innenbehälters und
- Fig. 4: eine Clinchverbindung von Deckel und Mantel des Innenbehälters.

Der als Ein- und Mehrwegbehälter einsetzbare Palettenbehälter 1 für den Transport und die Lagerung insbesondere von umweltgefährdenden Flüssigkeiten der hohen Gefahrenklasse weist als Hauptbauteile einen quaderförmigen Innenbehälter 2 mit abgerundeten Ecken, einen Außenmantel 3 aus sich kreuzenden senkrechten und waagerechten Gitterstäben 4, 5 aus Metall, der durch vier Eckstützen 6 aus Stahl mit einem Winkelprofil verstärkt wird, eine Palette 7 mit einer flachen Bodenwanne 8 aus Blech, die auf einem Palettenrahmen 9 aus Stahlrohr mit euronormgerechten Längen- und Breitenabmessungen befestigt ist und den Innenbehälter 2 formschlüssig aufnimmt, sowie einen gitterartigen Deckel 10 mit zwei V-förmigen Gitterstäben 11, 12 zum Schutz des Innenbehälters 2 und zur Versteifung des Gittermantels 3 auf.

Der Innenbehälter 2 besteht aus einer Außenhülle 13 aus Stahlblech mit einem Mantel 14, einem Bodenteil 15 mit einem Ablaufboden 16 und einem Deckel 17 sowie aus einer flüssigkeitsdichten, elastischen, als Blasteil hergestellten Innenhülle 18 aus Polyethylen mit einem dem Ablaufboden 16 der Außenhülle 13 angepaßten Ablaufboden 19.

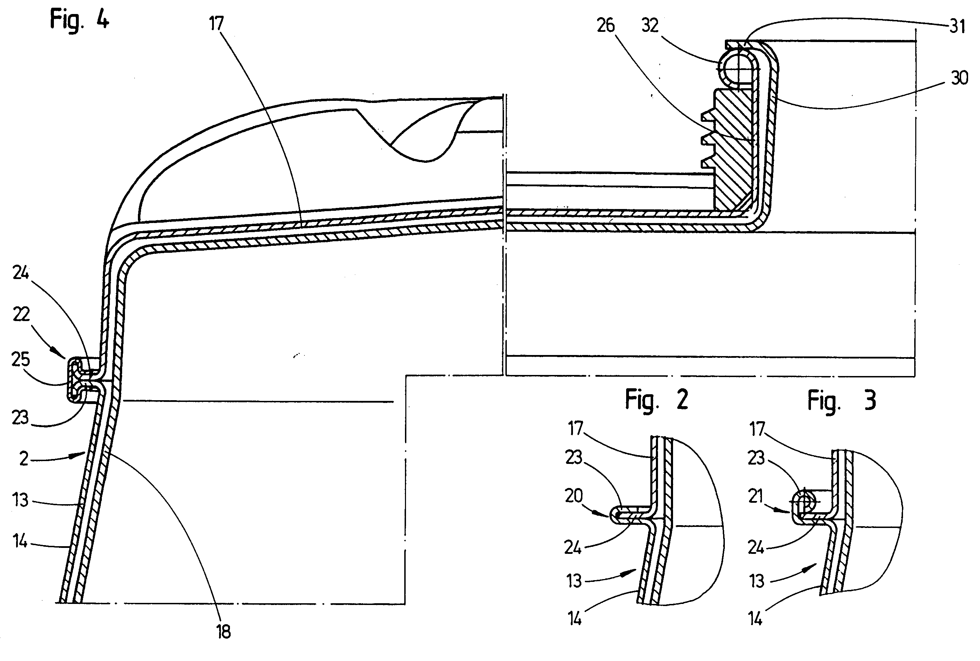

Mantel 14 und Deckel 17 der Außenhülle 13 des Innenbehälters 2 werden durch Falzverbindungen 20, 21 nach den Fign. 2 und 3 oder durch eine Clinchverbindung 22 gemäß Fig. 4 aneinander befestigt.

Zur Herstellung der liegenden Falzverbindung 20 nach Fig. 2 wird der abgekantete obere Mantelrand 23, der breiter ist als der Deckelrand 24, um den Deckelrand 24 nach innen gebogen, und bei der Herstellung der Stehfalzverbindung 21 nach Fig. 3 wird der Mantelrand 23 nach innen um den Deckelrand 24 gerollt.

Bei der Herstellung der Clinchverbindung 22 nach Fig. 4 wird ein vorprofilierter Verschlußring 25 aus Blech auf den nach oben abgekanteten Deckelrand 24 aufgesetzt und um den nach unten abgekanteten Mantelrand 23 gerollt.

In gleicher Weise werden Mantel 14 und Bodenteil 15 der Außenhülle 13 des Innenbehälters 2 zusammengefalzt oder miteinander verclincht.

Der Deckel 17 der Außenhülle 13 des Innenbehälters 2 ist mit einem durch einen Schraubdeckel 27 verschließbaren Einfüllstutzen 26 und das Bodenteil 15 der Außenhülle 13 mit einem Auslaufstutzen 28 mit einem Entnahmehahn 29 ausgestattet.

Beim Zusammenbau des Innenbehälters 2 werden zuerst Mantel 14 und Bodenteil 15 der Außenhülle 13 zusammengefalzt oder miteinander verclincht. Anschließend wird die Kunststoff-Innenhülle 18 in die offene Außenhülle 13 eingesetzt, wobei der nicht dargestellte Auslaufstutzen der Innenhülle 18 in den Auslaufstutzen 28 der Außenhülle 13 eingepaßt wird. Nunmehr wird der Einfüllstutzen 30 der elastischen Innenhülle 18 von innen durch den Einfüllstutzen 26 im Deckel 17 der Außenhülle 13 durchgesteckt und mit seinem oberen Ringrand 31 mit dem oberen, nach außen umgerollten 32 des Einfüllstutzens 26 im Deckel 17 der Außenhülle 13 verrastet. Abschließend werden Mantel 14 und Deckel 17 der Außenhülle 13 zusammengefalzt oder miteinander verclincht.

Zur Rekonditionierung des Palettenbehälters 1 wird der Innenbehälter 2 nach öffnen des Deckels 10 des Gittermantels 3 aus diesem entnommen, und nach dem Lösen der Falz- bzw. Clinchverbindung 20, 21 bzw. 22 von Deckel 17 und Mantel 14 der Außenhülle 13 kann die Kunststoff-Innenhülle 18 des Innenbehälters 2 ausgetauscht werden.

## Patentansprüche

1. Palettenbehälter für den Transport und die Lagerung von Flüssigkeiten, mit einem quaderförmigen Innenbehälter mit einem verschließbaren Einfüllstutzen und einem Auslaufstutzen zum Anschluß einer Entnahmearmatur, der einen Ablaufboden und einen als Gitter- oder Blechmantel ausgebildeten Außenmantel aufweist und in einer als Palette ausgebildeten, flachen Bodenwanne aus Blech oder Kunststoff steht, wobei der Innenbehälter mindestens eine Flüssigkeitsdichte Innenhülle aus Kunststoff und einen Mantel aus Stahlblech aufweist, dadurch gekennzeichnet, daß die Innenhülle (18) elastisch ist, daß der Innenbehälter (2) aus einer Außenhülle (13) aus Stahlblech mit dem Mantel (14), einem Bodenteil (15) mit einem Ablaufboden (16) und einem Deckel (17) sowie aus der flüssigkeitsdichten, elastischen Innenhülle (18) aus Kunststoff besteht, der Mantel (14) der Außenhülle (13) durch eine Falz- (20, 21) oder Clinchverbindung (22) mit dem Bodenteil (15) und dem Deckel (17) formschlüssig verbunden ist und daS der Einfüllstutzen (30) der elastischen Innenhülle (18) des Innenbehälters (2) von innen durch den entsprechenden Einfüllstutzen (26) im Deckel (17) der Außenhülle (13) durchgesteckt und mit seinem oberen Ringrand (31) mit dem oberen Rand (32) des Einfüllstutzens (26) im Deckel (17) der Außenhülle (13) verrastet ist.

## Claims

1. Pallet container for the transport and storage of liquids, with a cuboid-shaped inner container with a lockable filler neck and a discharge connection piece for connecting to a bleeder valve, and which has a discharge base and an outer casing configured as a lattice or steel casing and stands in a flat floor pan made of sheet steel or plastic and designed as a pallet, the inner container having at least one plastic inner cover which is impermeable to liquid and a casing made of sheet steel, **characterised in that** the inner cover (18) is resilient, in that the inner container (2) consists of an outer cover (13) made of sheet steel and with the casing (14), a base portion (15) with a discharge base (16) and a lid (17), as well as of the resilient plastic inner cover (18) which is impermeable to liquid, the casing (14) of the outer cover (13) is connected by a folded seam (20, 21) or clinch connection (22) with the base portion (15) and the lid (17) as a form-fit, and in that the filler neck (30) of the resilient inner cover (18) of the inner container (2) is pushed from the inside through the corresponding filler neck (26) in the lid (17) of the outer cover (13) and its upper ring edge (31) is locked together with the upper edge (32) of the filler neck (26) in the lid (17) of the outer cover (13).

## Revendications

1. Cuve-palette pour le transport et le stockage de liquides, comprenant une cuve intérieure parallélépipédique ayant une tubulure de remplissage qui peut être fermée et une tubulure de sortie pour le raccordement d'un robinet de prélèvement, qui comporte un fond d'évacuation et une enveloppe extérieure constituée sous la forme d'une enveloppe grillagée ou en tôle et une cuvette de fond plate, constituée en palette, en tôle ou en matière plastique, la cuve intérieure comportant au moins une chemise intérieure étanche aux liquides, en matière plastique et une enveloppe en tôle d'acier, caractérisée en ce que la chemise (18) intérieure est élastique en ce que la cuve (2) intérieure est constituée d'une chemise (13) extérieure, en tôle d'acier, ayant l'enveloppe (14), d'une pièce (15) de fond ayant un fond (16) d'évacuation et d'un couvercle (17) ainsi que de la chemise (18) intérieure élastique, en matière plastique, étanche aux liquides, l'enveloppe (14) de la chemise (13) extérieure est reliée par complémentarité de forme par une liaison par agrafage (20, 21) ou par serrage (22) à la pièce (15) de fond et au couvercle (17) et en ce que la tubulure (30) de remplissage de la chemise (18) intérieure élastique de la cuve (2) intérieure est enfilée de l'intérieur dans la tubulure (26) de remplissage correspondante du couvercle (17) de la chemise (13) extérieure et est encliquetée par son bord (31) annulaire supérieur au bord (32) supérieur de la tubulure (26) de remplissage du couvercle (17) de la chemise (13) extérieure.
